# EUROPÄISCHE PATENTSCHRIFT

(11) **EP 0 732 667 B1**
(45) Veröffentlichungstag und Bekanntmachung des Hinweises auf die Patenterteilung: **21.05.1997**
(21) Anmeldenummer: 95810177.6
(22) Anmeldetag: 16.03.1995
(51) Int. Cl.: G06K 19/16, G03H 1/02, B42D 15/10

(54) **Optischer Informationsträger**
Optical record carrier
Porteur d'information optique

(43) Veröffentlichungstag der Anmeldung: 18.09.1996
(73) Patentinhaber: Landis & Gyr Technology Innovation AG, 6301 Zug (CH)
(72) Erfinder: Tompkin, Wayne, CH-5400 Ennetbaden (CH); Staub, René, CH-6330 Cham (CH)

(56) Entgegenhaltungen:
- EP-A- 0 201 323
- EP-A- 0 264 277
- EP-A- 0 570 120
- WO-A-91/06925
- WO-A-94/25288
- DE-A- 3 233 197
- US-A- 3 703 407

## Beschreibung

Die Erfindung betrifft einen optischen Informationsträger der im Oberbegriff des Anspruchs 1 genannten Art.

Solche optische Informationsträger mit einer optischen Beugungsstruktur eignen sich beispielsweise zur Erhöhung der Fälschungssicherheit und der auffälligen Kennzeichnung von Gegenständen aller Art und sind insbesondere bei Wertpapieren, Ausweisen, Zahlungsmitteln und ähnlichen, zu sichernden Gegenständen verwendbar.

Die Beugungsstrukturen sind als Reliefstrukturen in eine erste Lackschicht eingeprägt und mit einer zweiten Schicht bedeckt, welche wenigstens teilweise reflektierend ist oder allgemein einen von der ersten Schicht unterschiedlichen Brechungsindex aufweist. Die Beugungsstrukturen verursachen Beugung des auf die Struktur einfallenden Lichtes. Der Höhenunterschied dieser Reliefstrukturen ist typisch zwischen 50 nm und 10'000 nm gewählt.

Ein optischer Informationsträger gemäss dem Oberbegriff des Anspruches 1 ist aus der internationalen Patentanmeldung WO 91/06925 bekannt, die einen Informationsträger mit optisch wirksamen Beugungsstrukturen beschreibt, die mit einer metallischen Schicht bedeckt sind. Die Beugungsstrukturen erzeugen ein als visuell sichtbares Echtheitsmerkmal dienendes erstes Bild. Direkt auf die Beugungsstrukturen ist ein zweites, nicht auf Beugungseffekten beruhendes Bild gedruckt. Das zweite Bild kann sichtbar oder unsichtbar sein und z.B. maschinenlesbare Information enthalten. Es ist auch vorgesehen, nur Teile des Informationsträgers mit der metallischen Schicht zu bedecken, so dass der Informationsträger teilweise durchsichtig erscheint. Ein weiterer optischer Informationsträger ist aus der europäischen Patentanmeldung EP 264 277 bekannt.

Das europäische Patent EP 201'323 Bl offenbart durchsichtige Hologramme, die als Echtheitsmerkmal auf ein Dokument aufgebracht werden können, ohne auf dem Dokument vorhandene, für das Auge sichtbare oder maschinenlesbare Informationen abzudecken.

Der Erfindung liegt die Aufgabe zugrunde, einen Informationsträger mit maschinenlesbarer und mit teilweise visuell erkennbarer Information vorzuschlagen, der einfach herstellbar und schwer fälsch- oder kopierbar ist.

Die genannte Aufgabe wird erfindungsgemäss gelöst durch die Merkmale der Ansprüche 1, 2, 4 und 5.

Nachfolgend werden Ausführungsbeispiele der Erfindung anhand der Zeichnung näher erläutert.

Es zeigen:
- Fig. 1: einen ersten Informationsträger im Querschnitt,
- Fig. 2: einen zweiten Informationsträger im Querschnitt,
- Fig. 3: den Informationsträger in der Draufsicht,
- Fig. 4: einen Ausschnitt einer Datenspur,
- Fig. 5: ein Lesegerät zum Lesen der im Informationsträger enthaltenen Information und
- Fig. 6a-c: ein Verfahren zur Herstellung des Informationsträgers.

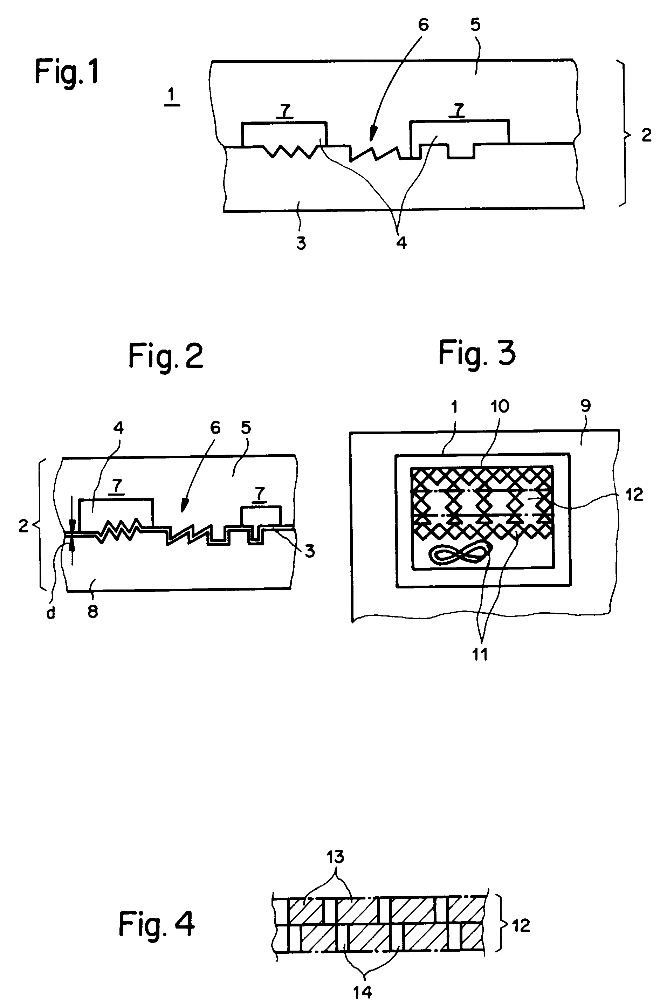

Die Fig. 1 zeigt einen Informationsträger 1 im Querschnitt, der als Schichtverbund 2 ausgebildet ist. Den Schichtverbund 2 bilden in einer ersten Ausführung eine erste, zweite und dritte Schicht 3 bzw. 4 bzw. 5. Die erste Schicht 3 ist eine Lackschicht, die auf der einen Oberfläche mikroskopisch feine Reliefstrukturen als optische Beugungsstrukturen 6 aufweist. Die zweite Schicht 4 bildet auf dieser Oberfläche der Schicht 3 Strukturen 7 dadurch, dass sie die Schicht 3 nur teilweise bedeckt. Die dritte Schicht 5 überzieht als eine vollflächige Schicht entsprechend den Strukturen 7 der zweiten Schicht 4 entweder in direktem Kontakt die erste Schicht 3 oder die zweite Schicht 4. Die drei Schichten 3, 4 und 5 bilden den Schichtverbund 2, so dass in der Form der Beugungsstrukturen 6 und der Strukturen 7 vorhandene Informationen fälschungssicher eingebettet sind. Die dritte Schicht 5 ist mit Vorteil eine Klebeschicht, so dass der Informationsträger 1 direkt mit der hier nicht gezeigten Oberfläche einer Basiskarte, einer Banknote, eines Dokumentes oder dergleichen verbunden werden kann. Die fuhr die drei Schichten 3, 4 und 5 verwendeten Materialien sind durch einen optischen Brechungsindex n3, n4 bzw. n5 optisch charakterisierbar. Die Brechungsindizes variieren in Abhängigkeit der Lichtwellenlänge λ und können auch komplexe Werte annehmen. Die Leuchtkraft der Beugungsstrukturen 6 hängt von der Differenz der Brechungsindizes der die Beugungsstrukturen 6 unmittelbar einbettenden Schichten (3, 4; 3, 5) ab.

Bekannte Technologien zur Herstellung des Schichtverbundes 2 mit den mikroskopisch feinen Reliefstrukturen sind z.B. das in der schweizerischen Patentschrift 661 683 beschriebene Verfahren, bei dem die Reliefstrukturen in eine Lackschicht aus thermoplastischem Werkstoffeingeprägt werden, das in den US-amerikanischen Patentschriften 4 758 296 und 4 840 757 beschriebene Verfahren, bei dem die Reliefstrukturen durch Abformen in UV-härtbaren Lack entstehen oder das von den Compact Discs bekannte Spritzgussverfahren.

Bei einer zweiten Ausführung des Schichtverbundes 2, wie er in der Fig. 2 dargestellt ist, ist die erste Schicht 3 mit den mikroskopisch feinen Reliefs eine optisch stark reflektierende Schicht, die auf eine vierte Schicht 8 aufgebracht ist. Die Dicke d der Schicht 3 ist entweder hinreichend klein, bevorzugt in der Grössenordnung von einigen Nanometern, so dass sie einerseits für Licht in einem Teilbereich Γ des sichtbaren elektromagnetischen Spektrums weitgehend transparent ist und andererseits die optischen Effekte der Beugungsstrukturen 6 visuell noch erkennbar sind, oder so gross, z.B. etwa 100 nm, dass sich eine starke optische Reflektivität ergibt. Mit zunehmender Dicke d der Schicht 3 nimmt die Reflektivität für sichtbares Licht und damit der durch die Beugungsstrukturen 6 zu bewirkende visuelle Eindruck zu, d.h. die Leuchtkraft des durch die Beugungsstrukturen 6 hervorgerufenen optischen Effektes ist durch die Wahl der Dicke d kontrollierbar. Die Schicht 3 ist vorzugsweise eine metallische oder halbleitende Reflektorschicht.

Die Fig. 3 zeigt ein mit dem Informationsträger 1 versehenes Dokument 9. Innerhalb eines berandeten Feldes 10 sind Muster 11 in den verschiedensten Formen und Farben für das menschliche Auge sichtbar. Das Feld 10 weist wenigstens eine Datenspur 12 zur Aufnahme maschinenlesbarer Information auf. Die Umrandung der Datenspur 12 ist zeichnerisch mit strichpunktierten Linien dargestellt. Die Datenspur 12 als solche ist unauffällig und für das menschliche Auge kaum erkennbar ausgebildet.

Die Muster 11 enthalten Beugungsstrukturen 6 (Fig. 1), die ihre optische Wirkung bestimmen. Die die reliefförmigen Beugungsstrukturen 6 charakterisierenden geometrischen Parameter Linienabstand, Orientierung und Profilform variieren örtlich innerhalb des Feldes 10 in einer vorbestimmten Art und Weise derart, dass die Muster 11 bei Betrachtung und Bewegung des Informationsträgers 1 unter normalen Beleuchtungsverhältnissen auffällige wechselnde optische Effekte zeigen, wie z.B. wechselnde Helligkeit oder Farbe. Benachbarte Muster 11 können auch abwechlungsweise spiegelnd hell oder dunkel erscheinen oder auf je nach Beleuchtungs- und Beobachtungsrichtung hellen oder dunklen Flächen matt erscheinen. Die Beugungsstrukturen 6 können insbesondere die wechselnden optischen Effekte erzeugen, wie sie von Hologrammen oder als optical variable graphics aus der EP-A 105 099 bekannt sind. Die optischen Effekte der Muster 11 stellen ein visuell einfach überprüfbares Merkmal dar.

Die Fig. 4 zeigt in vergrösserter Darstellung einen Ausschnitt der Datenspur 12 in der Draufsicht. Im Bereich der Datenspur 12 weisen die Muster 11 (Fig. 3) erste und zweite Flächenelemente 13 bzw. 14 auf, die in abwechselnder Reihenfolge in z.B. zwei Spuren angeordnet sind. Die Spuren sind gegeneinander um ein Flächenelement 14 versetzt und weisen beispielsweise eine Breite von 0.3 mm auf. Die ersten Flächenelemente 13 enthalten beliebig gestaltbare Beugungsstrukturen 6 (Fig. 1) zur Erzeugung visuell dominanter optischer Effekte der vorgängig beschriebenen Art. Die ersten Flächenelemente 13 können weiter unterteilt sein in eine vorbestimmte Anzahl Teilflächen, wobei jede Teilfläche wie in der europäischen Patentschrift EP 375 833 beschrieben, zu einem aus einem anderen Blickwinkel sichtbaren Bild beiträgt. Einige der ersten Flächenelemente 13 können auch als z.B. diffus streuende oder spiegelnde Flächen ausgebildet sein. Der Durchmesser des Leselichtstrahles eines Lesegerätes ist grösser als die Datenspur 12 breit ist. Die zweiten Flächenemente 14 enthalten Beugungsstrukturen 6, die in Bezug auf die Datenspur 12 alle gleich orientiert sind. Sie beugen deshalb den in einer vorbestimmten Richtung auf sie auffallenden Leselichtstrahl des Lesegerätes als Teilstrahlen in vorbestimmte Richtungen. Die geometrischen Abmessungen der zweiten Flächenelemente 14 betragen vorzugsweise weniger als 0.3 mm, so dass sie vom unbewaffneten Auge bei einem typischen Leseabstand von 30 cm höchstens als strukturlose Punkte wahrgenommen werden können. Im Bereich der Datenspur 12 ist die zweite Schicht 4 strukturiert, wobei die Abmessungen der Strukturen 7 in der durch die Datenspur 12 vorgegebenen Richtung grösser sind als die Abmessungen der zweiten Flächenelemente 14, so dass die Strukturen 7 beim maschinellen Auslesen der Datenspur 12 eine Modulation der Intensitäten der gebeugten Teilstrahlen bewirken. Das Verhältnis der von den Flächenelementen 13 eingenommenen Fläche zu der von den Flächenelementen 14 eingenommenen Fläche ist so vorbestimmt, dass einerseits der visuelle Eindruck vorherrscht, den die bildgestaltenden Flächenelemente 13 erzeugen, und dass andererseits die Maschinenlesbarkeit der in den Flächenelementen 14 und den Strukturen 7 enthaltenen Information gewährleistet ist. Wie und ob die Datenspur 12 zu diesem Zweck unterteilt ist, z.B. wie beschrieben in zwei oder mehr Spuren oder anders, ist nicht entscheidend. So ist es auch nicht erforderlich, die Flächenelemente 13 und 14 in regelmässigen Abständen anzuordnen. Die Strukturen 7 bilden vorzugsweise einen Strichcode.

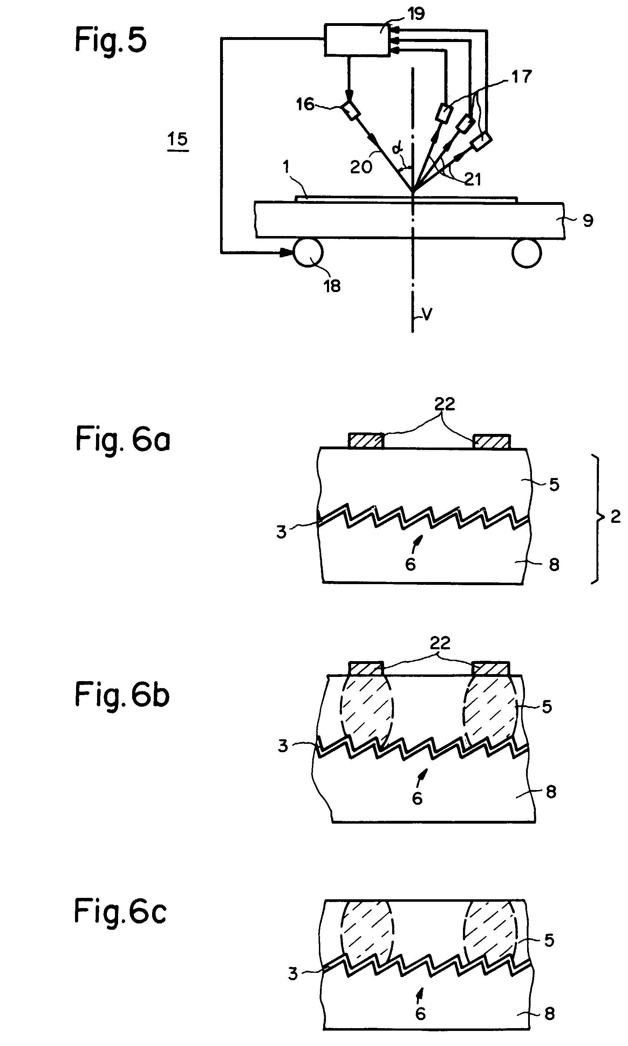

Die Fig. 5 zeigt ein Lesegerät 15, das eine Lichtquelle 16, Photodetektoren 17, eine Transporteinrichtung 18 und eine Steuer- und Auswerteschaltung 19 umfasst. Ein von der Lichtquelle 16 ausgeschickter Leselichtstrahl 20 trifft unter einem Einfallswinkel α schräg auf die Datenspur 12 (Fig. 3) des Informationsträgers 1. Zur Messung der Intensitäten der in die von den zweiten Flächenelementen 14 vorbestimmten Beugungsordnungen gebeugten Teilstrahlen 21 sind die Photodetektoren 17 im Lesegerät 15 entsprechend angeordnet. Die Transporteinrichtung 18 dient der relativen Verschiebung zwischen dem Leselichtstrahl 20 und dem Dokument 9 entlang der Datenspur 12. Die Steuer- und Auswerteschaltung 19 steuert beim Auslesen der Datenspur 12 diese Relativbewegung, erfasst gleichzeitig die Intensitäten der Teilstrahlen 21 und ermittelt daraus die in der Datenspur 12 gespeicherte Information.

Gemäss einer ersten Ausführungsform der Erfindung weist der Informationsträger 1 den in der Fig. 1 dargestellten Schichtaufbau auf und die Brechungsindizes n3, n4 und n5 der drei Schichten 3, 4 bzw. 5 erfüllen wenigstens näherungsweise die folgenden drei Bedingungen, nämlich dass erstens die Brechungsindizes n3, n4 und n5 über grosse Teile des sichtbaren Bereiches Γ des elektromagnetischen Spektrums reelle Werte aufweisen, dass zweitens im sichtbaren Bereich Γ die Differenzen zwischen dem Brechungsindex der ersten Schicht 3 und den Brechungsindizes der anderen Schichten 4 und 5 möglichst gross sind, vorzugsweise mehr als 0.5, mindestens jedoch 0.2 betragen: |n4-n3|, |n5-n3| ≥ 0.2 für λ ∈ Γ. Drittens beträgt die Differenz der Brechungsindizes der zweiten und dritten Schicht 4 bzw. 5 in einem vorgegebenen Spektralbereich Λ wenigstens 0.1: |n5-n4| ≥ 0.1 für λ ∈ Λ. Der sichtbare Spektralbereich Γ des Lichtes reicht von 390 nm bis 760 nm. Die ersten beiden Bedingungen müssen im Bereich der unteren wie auch der oberen Sichtbarkeitsgrenze nicht streng erfüllt sein. Wichtig ist, dass der vorgängig beschriebene visuelle Eindruck erreicht wird. Der Spektralbereich Λ entspricht vorzugsweise dem Lichtbereich einer handelsüblichen Halbleiterdiode, die z.B. annähernd monochromatisches Licht einer Wellenlänge von 780 nm emittiert.

Da die Werte der Brechungsindizes n3, n4 und n5 im sichtbaren Bereich Γ im wesentlichen reell sind, erscheint der Schichtverbund 2 einem Betrachter durchsichtig, so dass gegebenenfalls die bedruckte Oberfläche eines mit dem Informationsträger 1 versehenen Dokumentes sichtbar ist. Dank der geringen Differenz der Brechungsindizes n4 und n5 sind die Strukturen 7 vom unbewaffneten Auge eines menschlichen Betrachters nicht erkennbar, wohl aber maschinenlesbar. Die maschinelle Auslesung mittels des Leselichtstrahles 20 (Fig. 5) kann grundsätzlich sowohl von der Seite der dritten Schicht 5 wie von der Seite der ersten Schicht 3 erfolgen.

Gemäss einer zweiten Ausführungsform der Erfindung erfüllen die für die Schichten 3, 4 und 5 (Fig. 1) verwendeten Materialien die Bedingungen, dass erstens im sichtbaren Bereich Γ die zweite Schicht 4 wenigstens annähernd den gleichen Brechungsindex wie die erste Schicht 3 aufweist: n3≅n4, dass zweitens im sichtbaren Bereich Γ die Differenz zwischen dem Brechungsindex n3 der ersten Schicht 3 und dem Brechungsindex n5 der dritten Schicht 5 höchstens 0.2, vorzugsweise höchstens 0.1 beträgt: |n5-n3| < 0.2 für λ ∈ Γ, und dass drittens im Spektralbereich Λ des optischen Lesegerätes 15 (Fig. 5) diese Differenz wenigstens 0.1 betragt: |n5-n3| ≥ 0.1 für λ ∈ Λ. Wegen der geringen Unterschiede der Brechungsindizes n3, n4 und n5 im sichtbaren Bereich Γ erscheint das Feld 10 (Fig. 3) einem menschlichen Betrachter als durchsichtig und strukturlos. Die zweite Schicht 4 ist wiederum entlang der Datenspur 12 als Strichcode strukturiert. Überall dort, wo die zweite Schicht 4 fehlt, wird der Leselichtstrahl 20 des Lesegerätes 15 an den Beugungsstrukturen 6 als Teilstrahlen 21 in vorbestimmte Richtungen gebeugt. Überall dort, wo die zweite Schicht 4 vorhanden ist, wird der Leselichtstrahl 20 nicht gebeugt.

Bei der Verwendung von Gittern mit einem asymmetrischen Profil als Beugungsstrukturen 6 kann z.B. mehr Licht in die positiven Beugungsordnungen als in die negativen Beugungsordnungen gebeugt werden. Das Lesegerät 15 ist für einen solchen Fall eingerichtet, die Intensitäten der verschiedenen Teilstrahlen 21 und insbesondere deren Verhältnisse zu analysieren. Auf diese Weise ist eine maschinelle Echtheitsprüfung aufgrund physikalischer Eigenschaften der Beugungsstrukturen 6 durchführbar.

Das Dokument 9 kann auch ein Wertpapier, insbesondere eine Banknote sein. In diesem Fall ist das Lesegerät 15 eingerichtet, ein ganzes Bündel oder einen Stapel von Banknoten selbsttätig durchzublättern und jede Banknote einzeln zu lesen und die aus den Strukturen 7 gelesenen Informationen wie z.B. Nummer der Banknote, Typ der Banknote, etc. weiterzuverarbeiten. Weitere Mittel sind vorgesehen, um Banknoten, die die Echtheitsprüfung nicht bestehen, auszusortieren oder zurückzuweisen.

Beide Ausführungsformen der Erfindung ermöglichen die Bezeichnung von Dokumenten, insbesondere von Banknoten, mittels eines individualisierten Informationsträgers. Die Bezeichnung, die z.B. eine fortlaufende Nummer sein kann, kann für das menschliche Auge sichtbar oder verborgen sein. Die vorgeschlagene Struktur des Schichtverbundes ergibt eine hohe Fälschungssicherheit, da die in den Strukturen der zweiten Schicht gespeicherte Information gleichzeitig ein Echtheitsmerkmal darstellt oder mit einem visuell sichtbaren Echtheitsmerkmal untrennbar verbunden ist. Die Information kann auf dem Dokument zusätzlich in anderer Form vorhanden sein, z.B. wie üblich gedruckt.

Die Individualisierung des Informationsträgers 1 erfolgt beispielsweise, in dem die zweite Schicht 4 mittels eines Tintenstrahldruckers aufgebracht wird. Der Tintenstrahldrucker ist dabei von einem Computer so gesteuert, dass die strukturierte Schicht 4 entsteht.

Bei einer besonders vorteilhaften Ausführung des Informationsträgers 1, der einen Schichtaufbau aufweist, wie er in den Fig. 1 oder 2 gezeigt ist, bestehen die die Strukturen 7 bildende Schicht 4 und die dritte Schicht 5 aus dem gleichen Grundmaterial, die Schicht 4 ist jedoch zusätzlich mit einem Fremdstoff, beispielsweise einem Farbstoff dotiert. Der Farbstoff weist eine hohe Absorption auf im Wellenlängenbereich Λ, in dem die maschinelle Auslesung der in den Strukturen 7 enthaltenen Information erfolgt. Durch die Zugabe eines solchen Farbstoffes wird der Imaginärteil des Brechungsindexes n4 der Schicht 4 verändert. Die Auslesung mittels des Leselichtstrahles 20 erfolgt von der Seite der Schicht 5. Die Intensitäten der an den Beugungsstrukturen 6 gebeugten Teilstrahlen 21 (Fig. 5) hängt nun davon ab, ob der Leselichtstrahl 20 beim Lesen der Datenspur 12 durch die dritte Schicht 5 hindurch direkt auf die Beugungsstrukturen 6 trifft oder ob der Leselichtstrahl 20 durch die dritte Schicht 5 und durch die zweite Schicht 4 hindurch auf die Beugungsstrukturen 6 trifft. Im letzteren Falle erfahren der Leselichtstrahl 20 und die Teilstrahlen 21 wegen der Absorption eine Abschwächung oder sogar ein praktisch vollständiges Verschwinden ihrer Intensität. Die Information der in den Strukturen 7 enthaltenen Information ist somit aufgrund der Modulation der Intensitäten der Teilstrahlen 21 beim Auslesen von der Steuer- und Auswerteschaltung 19 bestimmbar. Die Schichten 4 und 5 sind praktisch untrennbar verbunden, da sie bis auf den Farbstoff aus dem gleichen Material, vorzugsweise einem als Lack verarbeitbaren Kunststoff, bestehen. Im sichtbaren Wellenlängenbereich Γ weist der Farbstoff eine geringe oder verschwindende Absorption auf, so dass der durch die Beugungsstrukturen 6 hervorgerufene visuelle Eindruck durch den Farbstoff wenig oder überhaupt nicht beeinträchtigt ist. Es kann auch ein Farbstoff zum Einsatz kommen, der in einem relativ schmalbandigen Bereich Φ des sichtbaren Spektrums Γ eine grosse Absorptionskonstante aufweist. Der Spektralbereich Λ des Leselichtstrahles 20 muss dann auf den Bereich Φ abgestimmt sein und liegt dann auch innerhalb des sichtbaren Spektrums Γ.

Es ist auch möglich, dass durch Zugabe eines Fremdstoffes in die Schicht 4 der Realteil des Brechungsindexes n4 verändert wird und zwar infolge einer Dichteänderung der Schicht 4. Auch in diesem Fall erfolgt durch die Strukturen 7 beim Lesen mittels des Leselichtstrahles 20 eine Modulation der Intensitäten der gebeugten Teilstrahlen 21, die von der Steuer- und Auswerteeinheit 19 auswertbar ist.

Bei einem ersten Verfahren zur Herstellung eines derartigen Informationsträgers 1 mit einem derartigen Farbstoff wird ein flüssiger Lack, der den Farbstoff als gelöste Teilchen enthält, nach einem bekannten Druckverfahren als strukturierte Schicht 4 auf die Schicht 3 bzw. 3a aufgebracht, in die vorgängig Beugungsstrukturen 6 z.B. durch Prägen, Abformen oder Abgiessen eingebracht wurden. Nach dem Austrocknen und/oder Erhärten wird die Schicht 5 aufgebracht. Die Verwendung UV-härtbarer Lacke erlaubt ein besonders zeitsparendes Herstellungsverfahren.

Bei einem zweiten Verfahren, das in den Fig. 6a, 6b und 6c dargestellt ist, wird zuerst ein Schichtverbund 2 aus wenigstens einer ersten Schicht 3 und einer Lackschicht 5 hergestellt. Falls die erste Schicht 3 eine stark reflektierende Schicht ist, dann ist die Schicht 3 mit Vorteil zwischen die Lackschicht 5 und eine weitere Schicht 8 eingebettet. Anschliessend wird der Fremdstoff als strukturierte Schicht 22 wiederum nach einem bekannten Verfahren aufgebracht (Fig. 6a). Bei einem nächsten Schritt wird der Schichtverbund 2 für eine vorbestimmte Zeitdauer einer erhöhten Temperatur ausgesetzt, die noch unterhalb des Erweichungspunktes der Lackschichten 3 und 5 liegt und beispielsweise 100° C beträgt, damit der Fremdstoff teilweise in die Schicht 5 hineindiffundiert (Fig. 6b). Die Zeitdauer ist vorzugsweise so lange gewählt, dass der Fremdstoff bis zu den Beugungsstrukturen 6 oder auch noch etwas weiter in die Schicht 3 hineindiffundiert. Es ist jedoch auch möglich, die gewünschte Information als Strukturen 7 zu schreiben, und optisch auszulesen, ohne dass der Fremdstoff bis zur Schicht 3 diffundiert. Bei Bedarf wird am Schluss die Schicht 22 wieder entfernt (Fig. 6c). Das maschinelle Lesen der Information erfolgt auch in diesem Fall von der Seite der Lackschicht 5.

Das zweite Verfahren eignet sich zur Individualisierung des Informationsträgers 1 mittels einer kleinen Einrichtung, die aus einem Schreibgerät zum Aufbringen der Schicht 22 auf den Schichtverbund 2, z.B. einem Tintenstrahldrucker oder einem Laserdrucker, und einem kleinen Heizgerät besteht. Dabei kann der Informationsträger 1 bereits vor der Individualisierung auf ein Dokument wie z.B. eine Identitätskarte oder ein Sicherheitspapier aufgebracht werden.

Bei einem dritten Verfahren zur Herstellung eines derartigen Informationsträgers 1 wird ein Lack, der den Farbstoff als gelöste Teilchen enthält, nach einem bekannten Verfahren als unstrukturierte Schicht 5 auf die Schicht 3 bzw. 3a aufgebracht, in die vorgängig Beugungsstrukturen 6 z.B. durch Prägen, Abformen oder Abgiessen eingebracht wurden. Strukturen 7 werden erst bei der Individualisierung des Informationsträgers 1 gebildet, indem der Farbstoff durch lokales Erwärmen über eine dem Farbstoff eigene Grenztemperatur an der erwärmten Stelle eine lokal irreversible Umwandlung von einer transparenten Substanz in eine für das Licht zum Auslesen der Information absorbierende Substanz oder umgekehrt bewirkt. Die lokal veränderten Stellen und die unveränderten Stellen bilden zusammen die Strukturen 7. Beispielsweise ist die Lackschicht 5 vor dem Einschreiben der Information völlig transparent. Nach dem Einschreiben der Information ist die Lackschicht 5 an den lokal veränderten Stellen für das Licht zum Auslesen der Information undurchsichtig. Für das Lesegerät 15 wirkt die Veränderung der Transparenz gleich, wie wenn die Beugungsstruktur 6 in eine Mattstruktur umgewandelt würde. Solche, ein thermochromes Verhalten aufweisende Farbstoffe sind z. B. aus den Schriften US-PS 2 663 654, US-PS 3 682 684 und EP 277 032 bekannt. Ein Vorteil dieses Verfahrens liegt darin, dass bei richtiger Dosierung der zugeführten Wärmeenergie die Oberfläche der Schichten 3, 5 unversehrt bleibt.

Bestimmt die Differenz der Brechungindizes n3 und n5 der beiden Schichten 3 und 5 die optische Eigenschaft der Beugungsstruktur 6, dann ermöglicht ein Einbau des thermochromen Farbstoffs in der Lackschicht 5, oder in der Schicht 3, falls die Schicht 3 ebenfalls eine Lackschicht ist, beim Einschreiben den entsprechenden Brechungsindex einmal irreversibel zu ändern. Beim Auslesen der Information ist die Intensität der durch Beugungseffekte in den Photodetektor 17 gelenkten Lichtmenge davon abhängig, ob sich der Farbstoff an der lokalen Stelle durch Erwärmen umgewandelt hat und die Differenz der Brechungsindizes n3 und n5 lokal verändert ist.

Das Lesegerät 15 kann die Information aus den Strukturen 7 auslesen, die als Muster der irreversibel veränderten Stellen auf dem Hintergrund der verbliebenen, unveränderten Schicht 3 bzw. 5 gebildet sind. Da das Lesegerät 15 zum Lesen der Information nur das an den Beugungsstrukturen 6 gebeugte Licht empfängt bzw. dessen Fehlen feststellt, weisen diese Informationsträger den Vorteil auf, dass sie zwar einmal beschreibbar, jedoch nur mit grossem Aufwand nachzuahmen oder zu fälschen sind. Die Beugungsstrukturen 6 und die Unversehrtheit der Oberfläche ermöglichen auch dem Laien eine visuelle Überprüfung der Echtheit des Informationsträgers 1.

Das lokale Erwärmen des Farbstoffes kann z.B. durch Bestrahlung mit intensivem Licht erfolgen. Mit Vorteil weist der Lichtstrahl eines Schreib-/Lesegerätes beim Einschreiben nicht nur eine höhere Intensität als das Licht zum Auslesen auf, sondern das Einschreiben erfolgt mit Licht, dessen Intensitätsmaximum in einem anderen Wellenlängenbereich liegt. Beispielsweise werden die Beugungsstrukturen 6 mit infrarotem Licht ausgelesen, während zum Einschreiben ein Lichtstrahl mit einer anderen, dem Farbstoff angepassten Wellenlänge eingesetzt wird.

Ein Dokument, das mit einem Informationsträger versehen ist, der wenigstens aus den beiden Schichten 3 und 5 besteht, wobei eine der beiden Schichten 3, 5 mit einem Farbstoff dotiert ist, eignet sich besonders für Anwendungen, bei denen die Information dezentral eingeschrieben werden soll. Solche Anwendungen sind z.B. Ausweise aller Art oder auch eine optische Geldbörse, bei der der aktuelle Geldbetrag fortlaufend entlang einer Datenspur oder in einem zweidimensionalen Datenfeld eingeschrieben ist. Jeder Geldtransfer auf die Geldbörse oder von der Geldbörse wird von einem Schreib-/Lesegerät vorgenommen, wobei die Zahl der möglichen Transaktionen durch die Anzahl der optisch schreibbaren Bits vorgegeben ist.

Das in der Fig. 3 dargestellte Feld 10 kann anstelle oder zusätzlich zur Datenspur 12 ein zweidimensionales Datenfeld enthalten, wobei beim Auslesen mittels des Lesegerätes jeder beliebige xy-Datenpunkt des Datenfeldes adressierbar ist. Ein solches Datenfeld enthält wiederum erste und zweite Flächenelemente 13 bzw. 14. Die Flächenelemente 14, die zur Darstellung der maschinenlesbaren Information dienen, enthalten in der einfachsten Ausführung nur Beugungsstrukturen 6, die als Gitter mit vorbestimmtem Linienabstand, vorbestimmter Orientierung und vorbestimmter Profilform ausgebildet sind, damit sie das Licht des Leselichtstrahles in vorbestimmte Richtungen beugen. In einer weiteren Ausführung sind die zweiten Flächenelemente 14 in Unterelemente unterteilt. Die Unterelemente enthalten jeweils eine unterschiedliche Beugungsstruktur 6, die das Licht des Leselichtstrahles in unterschiedliche Richtungen beugt. Die Strukturierung der zweiten Schicht 4 zur Bildung der maschinenlesbaren Information kann dann so erfolgen, dass von beispielsweise zwei Unterelementen eines Flächenelementes 14 jeweils nur das eine mit der Schicht 4 bedeckt ist.

Zur Erzielung einer hohen Beugungseffizienz sind die Beugungsstrukturen 6 vorzugsweise als zweidimensionale Gitter ausgebildet, die durch einen konstanten Linienabstand und eine vorgegebene Profilform charakterisiert sind. Es ist jedoch auch möglich, einen Satz mit einer Anzahl von vorbestimmten Beugungsstrukturen 6 vorzusehen, die das Licht nicht in wenige ausgewählte Richtungen beugen, sondern die das Licht in vorbestimmte Raumwinkel beugen. In einem solchen Fall weist das dazugehörige Lesegerät anstelle einzelner Photodetektoren bevorzugt einen ein- oder zweidimensionalen Array an Photodetektoren auf, z.B. einen CCD-Sensor. Mit einem solchen CCD-Sensor ist die Intensitätsverteilung des in einen vorbestimmten Raumwinkel gebeugten Lichtes messbar.

## Patentansprüche

1. Informationsträger (1), der als Schichtverbund (2) mit wenigstens einer ersten, einer zweiten und einer dritten Schicht (3; 4; 5) ausgebildet ist, die einen optischen Brechungsindex n3, n4 bzw. n5 aufweisen, wobei die der zweiten und dritten Schicht (4; 5) zugewandte Oberfläche der ersten Schicht (3) erste Beugungsstrukturen (6) aufweist, die als mikroskopisch feine Reliefstrukturen ausgebildet sind und die durch Beugung einfallenden Lichtes ein visuell nachprüfbares Echtheitsmerkmal erzeugen, wobei die zweite Schicht (4) Strukturen (7) bildet, indem die zweite Schicht (4) die erste Schicht (3) nur teilweise bedeckt, und wobei die dritte Schicht (5) entsprechend den Strukturen (7) die zweite Schicht (4) bzw. die erste Schicht (3) in direktem Kontakt überzieht, **gekennzeichnet durch die Merkmale**
a) dass die Brechungsindizes n4 und n5 über grosse Teile des sichtbaren Bereiches Γ des elektromagnetischen Spektrums im wesentlichen reell und daher die zweite und dritte Schicht (4; 5) durchsichtig sind,
b) dass die absoluten Differenzen |n4-n3| und |n5-n3| über grosse Teile des sichtbaren Bereiches Γ grösser als 0.2 sind, damit die ersten Beugungsstrukturen (6) unabhängig von den Strukturen (7) sichtbare Beugungseffekte erzeugen,
c) dass die Differenzen n4-n3 und n5-n3 über grosse Teile des sichtbaren Bereiches Γ annähernd gleich gross sind, damit die Strukturen (7) dem menschlichen Auge verborgen bleiben,
d) dass die Oberfläche der ersten Schicht (3) zweite Flächenelemente (14) mit einer zweiten Beugungsstruktur (6) aufweist, die durch erste Flächenelemente (13) mit den ersten Beugungsstrukturen (6) getrennt sind, und
e) dass die absolute Differenz |n5-n4| in einem zweiten vorgegebenen Spektralbereich Λ, der entweder ausserhalb des sichtbaren Bereiches Γ des Lichtes liegt oder nur einen relativ schmalbandigen Bereich (Φ) des sichtbaren Bereiches Γ umfasst, wenigstens 0.1 beträgt, damit die Strukturen (7) beim Lesen der in ihnen enthaltenen Information mittels eines im Spektralbereich Λ liegenden Leselichtstrahles (20) eine messbare Veränderung des an den zweiten Flächenelementen (14) mit der zweiten Beugungsstruktur (6) gebeugten Leselichtstrahles (20) bewirken.

2. Informationsträger (1), der als Schichtverbund (2) mit wenigstens einer ersten, einer zweiten und einer dritten Schicht (3; 4; 5) ausgebildet ist, die einen optischen Brechungsindex n3, n4 bzw. n5 aufweisen, wobei die der zweiten und dritten Schicht (4; 5) zugewandte Oberfläche der ersten Schicht (3) Beugungsstrukturen (6) aufweist, die als mikroskopisch feine Reliefstrukturen ausgebildet sind, wobei die zweite Schicht (4) Strukturen (7) bildet, indem die zweite Schicht (4) die erste Schicht (3) nur teilweise bedeckt, und wobei die dritte Schicht (5) entsprechend den Strukturen (7) die zweite Schicht (4) bzw. die erste Schicht (3) in direktem Kontakt überzieht, **gekennzeichnet durch die Merkmale**
a) dass die Brechungsindizes n3, n4 und n5 über grosse Teile des sichtbaren Bereiches Γ des elektromagnetischen Spektrums im wesentlichen reell und daher die erste, zweite und dritte Schicht (3; 4; 5) durchsichtig sind,
b) dass die Brechungsindizes n3 und n4 im sichtbaren Bereich Γ annähernd gleich sind, damit an ihrer gemeinsamen Grenzfläche keine Beugung auftritt,
c) dass die absoluten Differenzen der Brechungsindizes |n5-n3| und |n5-n4| im sichtbaren Bereich Γ höchstens 0.2 betragen, damit die Beugungsstrukturen (6) dem menschlichen Auge möglichst verborgen bleiben, und
d) dass die absolute Differenz |n5-n3| in einem zweiten vorgegebenen Spektralbereich Λ, der entweder ausserhalb des sichtbaren Bereiches Γ des Lichtes liegt oder nur einen relativ schmalbandigen Bereich (Φ) des sichtbaren Bereiches Γ umfasst, wenigstens 0.1 beträgt, damit die Strukturen (7) beim Lesen der in ihnen enthaltenen Information mittels eines im Spektralbereich A liegenden Leselichtstrahles (20) entsprechend dem Vorhandensein oder Nicht-Vorhandensein der zweiten Schicht (4) keine Beugung bzw. Beugung an den Beugungsstrukturen (6) bewirken.

3. Informationsträger (1) nach Anspruch 1 oder 2, dadurch **gekennzeichnet, dass** die zweite Schicht (4) mit einem Fremdstoff, insbesondere einem Farbstoff, dotiert ist, der im Spektralbereich A eine hohe Absorptionskonstante aufweist.

4. Informationsträger (1), der als Schichtverbund (2) mit einer ersten und wenigstens einer weiteren Schicht (3; 5) ausgebildet ist, die einen optischen Brechungsindex n3 bzw. n5 aufweisen, wobei die der weiteren Schicht (5) zugewandte Oberfläche der ersten Schicht (3) erste Beugungsstrukturen (6) aufweist, die als mikroskopisch feine Reliefstrukturen ausgebildet sind und die durch Beugung einfallenden Lichtes ein visuell nachprüfbares Echtheitsmerkmal erzeugen, **gekennzeichnet durch die Merkmale**
a) dass die weitere Schicht (5) annähernd durchsichtig ist,
b) dass die absolute Differenz |n5-n3| über grosse Teile des sichtbaren Bereiches Γ grösser als 0.2 ist, damit die ersten Beugungsstrukturen (6) sichtbare Beugungseffekte erzeugen,
c) dass die Oberfläche der ersten Schicht (3) zweite Flächenelemente (14) mit einer zweiten Beugungsstruktur (6) aufweist, die durch erste Flächenelemente (13) mit den ersten Beugungsstrukturen (6) getrennt sind, und
d) dass die weitere Schicht (5) mit Strukturen (7) versehbar ist, indem ihr Brechungsindex n5 in einem vorbestimmten Spektralbereich Λ, der entweder ausserhalb des sichtbaren Bereiches Γ des Lichtes liegt oder nur einen relativ schmalbandigen Bereich (Φ) des sichtbaren Bereiches Γ umfasst, durch lokale Dotierung mit einem Fremdstoff lokal verändert wird, ohne dass die durch das Muster der unveränderten und der veränderten Stellen gebildeten Strukturen (7) vom unbewaffneten menschlichen Auge erkennbar sind und damit die Strukturen (7) beim Lesen der in ihnen enthaltenen Information mittels eines im Spektralbereich Λ arbeitenden Leselichtstrahles (20) eine messbare Intensitätsmodulation des an den zweiten Flächenelementen (14) mit der zweiten Beugungsstruktur (6) gebeugten Leselichtstrahles (20) bewirken.

5. Informationsträger (1), der als Schichtverbund (2) mit einer ersten und wenigstens einer weiteren Schicht (3; 5) ausgebildet ist, die einen optischen Brechungsindex n3 bzw. n5 aufweisen, wobei die der weiteren (5) Schicht zugewandte Oberfläche der ersten Schicht (3) erste Beugungsstrukturen (6) aufweist, die als mikroskopisch feine Reliefstrukturen ausgebildet sind und die durch Beugung einfallenden Lichtes ein visuell nachprüfbares Echtheitsmerkmal erzeugen, **gekennzeichnet durch die** **Merkmale**
a) dass die erste oder die weitere Schicht (3; 5) mit einem Farbstoff dotiert ist,
b) dass die weitere Schicht (5) annähernd durchsichtig ist,
c) dass die absolute Differenz |n5-n3| über grosse Teile des sichtbaren Bereiches Γ grösser als 0.2 ist, damit die ersten Beugungsstrukturen (6) sichtbare Beugungseffekte erzeugen,
d) dass die Oberfläche der ersten Schicht (3) zweite Flächenelemente (14) mit einer zweiten Beugungsstruktur (6) aufweist, die durch erste Flächenelemente (13) mit den ersten Beugungsstrukturen (6) getrennt sind, und
e) dass die erste Schicht (3) oder die weitere Schicht (5) durch lokales Erwärmen über eine dem Farbstoff eigene Grenztemperatur irreversibel mit Strukturen (7) versehbar ist, wobei der Brechungsindex n3 bzw. n5 an den erwärmten Stellen in einem vorbestimmten Spektralbereich Λ, der entweder ausserhalb des sichtbaren Bereiches Γ des Lichtes liegt oder nur einen relativ schmalbandigen Bereich (Φ) des sichtbaren Bereiches Γ umfasst, lokal verändert wird, ohne dass die durch das Muster der unveränderten und der veränderten Stellen gebildeten Strukturen (7) vom unbewaffneten menschlichen Auge erkennbar sind und damit die Strukturen (7) beim Lesen der in ihnen enthaltenen Information mittels eines im Spektralbereich Λ arbeitenden Leselichtstrahles (20) eine messbare Intensitätsmodulation des an den zweiten Flächenelementen (14) mit der zweiten Beugungsstruktur (6) gebeugten Leselichtstrahles (20) bewirken.

6. Informationsträger (1) nach einem der Ansprüche 1 oder 3 bis 5, **dadurch gekennzeichnet, dass** die Abmessungen der zweiten Flächenelemente (14) höchstens 0.3 mm betragen.

7. Informationsträger (1) nach einem der Ansprüche 1 oder 3 bis 6, **dadurch gekennzeichnet, dass** die zweiten Beugungsstrukturen (6) ein asymmetrisches Profil aufweisen, das als Echtheitsmerkmal überprüfbar ist.

8. Informationsträger (1) nach Anspruch 2, **dadurch gekennzeichnet, dass** die Beugungsstrukturen (6) ein asymmetrisches Profil aufweisen, das als Echtheitsmerkmal überprüfbar ist.

9. Dokument (9) mit einem Informationsträger (1) nach einem der Ansprüche 1 bis 8.

10. Dokument (9) nach Anspruch 9, **dadurch gekennzeichnet, dass** das Dokument (9) eine Kreditkarte, eine Wertkarte, eine Banknote, ein Ausweis oder ein Pass ist.

11. Lesegerät (15) für einen Informationsträger (1) nach Anspruch 7, das eine Lichtquelle (16) und Photodetektoren (17) umfasst, **dadurch gekennzeichnet, dass** die Photodetektoren (17) die Intensitäten des an den zweiten Flächenelementen (14) mit der zweiten Beugungsstruktur (6) gebeugten Lichtes des Leselichtstrahles (20) erfassen und dass das Lesegerät zum Nachweis des asymmetrischen Profils der zweiten Beugungsstrukturen (6) die Verhältnisse der Intensitäten analysiert.

12. Lesegerät (15) für einen Informationsträger (1) nach Anspruch 8, das eine Lichtquelle (16) und Photodetektoren (17) umfasst, **dadurch gekennzeichnet, dass** die Photodetektoren (17) die Intensitäten des an der Beugungsstruktur (6) gebeugten Lichtes des Leselichtstrahles (20) erfassen und dass das Lesegerät zum Nachweis des asymmetrischen Profils der Beugungsstrukturen (6) die Verhältnisse der Intensitäten analysiert.

13. Verfahren zur Herstellung eines Informationsträgers (1) nach Anspruch 4, **gekennzeichnet durch die Schritte**
a) Herstellen eines Schichtverbundes (2) aus wenigstens einer ersten und einer weiteren Schicht (3, 5), wobei fakultativ eine stark reflektierende Schicht (3a) zwischen die beiden Schichten (3, 5) eingebettet ist.
b) Aufbringen eines Fremdstoffes als strukturierte Schicht (22) auf die weitere Schicht (5) des Schichtverbundes (2).
c) Erwärmung des Informationsträgers (1) für eine vorbestimmte Zeitdauer auf eine vorbestimmte Temperatur, die noch unterhalb des Erweichungspunktes der Schichten (3, 5) liegt, so dass der Fremdstoff teilweise in die weitere Schicht (5) hineindiffundiert.

14. Verfahren nach Anspruch 13, **dadurch gekennzeichnet, dass** die Reste der strukturierten Schicht (22) entfernt werden.

## Claims

1. An information carrier (1) which is in the form of a composite laminate (2) having at least a first, a second and a third layer (3; 4; 5), which layers (3; 4; 5) have optical refractive indices n3, n4 and n5 respectively, wherein the surface of the first layer (3), which is towards the second and third layers (4; 5), has first diffraction structures (6) which are in the form of microscopically fine relief structures and which by diffraction of incident light produce a visually verifiable authenticity feature, wherein the second layer (4) forms structures (7) by the second layer (4) only partially covering the first layer (3) and wherein according to the the structures (7) the third layer (5) covers in direct contact the first layer (3) or the second layer (4), characterized in that:
a) the refractive indices n4 and n5 are substantially real over large parts of the visible range Γ of the electromagnetic spectrum and therefore the second and third layers (4; 5) are transparent,
b) the absolute differences |n4-n3| and |n5-n3| over large parts of the visible range Γ are greater than 0.2 so that the first diffraction structures (6) produce visible diffraction effects independently of the structures (7),
c) the differences n4-n3 and n5-n3 over large parts of the visible range Γ are of approximately equal magnitude so that the structures (7) remain concealed from the human eye,
d) the surface of the first layer (3) has second surface elements (14) with a second diffraction structure (6), which are separated by first surface elements (13) with the first diffraction structures (6), and
e) the absolute difference |n5-n4| in a second predetermined spectral range Λ, which either lies outside the visible range Γ of the light or includes only a relatively narrow-band range (Φ) of the visible range Γ, is at least 0.1 so that in an operation of reading the information contained therein by means of a reading light beam (20) in the spectral range Λ the structures (7) produce a measurable change in the reading light beam (20) which is diffracted at the second surface elements (14) with the second diffraction structure (6).

2. An information carrier (1) which is in the form of a composite laminate (2) with at least a first, a second and a third layer (3; 4; 5), which layers have optical refractive indices n3, n4 and n5 respectively, wherein the surface of the first layer (3), which is towards the second and third layers (4; 5), has diffraction structures (6) which are in the form of microscopically fine relief structures, wherein the second layer (4) forms structures (7) by the second layer (4) only partially covering the first layer (3) and wherein according to the the structures (7) the third layer (5) covers in direct contact the first layer (3) or the second layer (4), characterized in that:
a) the refractive indices n3, n4 and n5 are substantially real over large parts of the visible range Γ of the electromagnetic spectrum and therefore the first, second and third layer (3; 4; 5) are transparent, b) the refractive indices n3 and n4 are approximately equal in the visible range Γ so that no diffraction occurs at the common interface of the first and second layers (3; 4),
c) the absolute differences of the refractive indices |n5-n3| and |n5-n4| in the visible range Γ are at most 0.2 so that the diffraction structures (6) remain as far as possible concealed from the human eye, and
d) the absolute difference |n5-n3| in a second predetermined spectral range Λ, which either lies outside the visible range Γ of the light or includes only a relatively narrow-band range (Φ) of the visible range Γ, is at least 0.1 so that in an operation of reading the information contained therein by means of a reading light beam (20) in the spectral range Λ, the structures (7), according to the presence or absence of the second layer (4), produce no diffraction or diffraction at the diffraction structures (6) respectively.

3. An information carrier (1) according to claim 1 or claim 2 characterized in that the second layer (4) is doped with a foreign substance, in particular a dye, which has a high absorption constant in the spectral range Λ.

4. An information carrier (1) which is in the form of a composite laminate (2) with a first and at least one further layer (3; 5), which layers have optical refractive indices n3 and n5 respectively, wherein the surface of the first layer (3), which is towards the further layer (5), has first diffraction structures (6) which are in the form of microscopically fine relief structures and which by diffraction of incident light produce a visually verifiable authenticity feature, characterized in that:
a) the further layer (5) is approximately transparent,
b) the absolute difference |n5-n3| over a large part of the visible range Γ of the electromagnetic spectrum is greater than 0.2 so that the first diffraction structures (6) produce visible diffraction effects,
c) the surface of the first layer (3) has second surface elements (14) with a second diffraction structure (6), which are separated by first surface elements (13) with the first diffraction structures (6),
d) the further layer (5) can be provided with structures (7) by a procedure whereby its refractive index n5, in a predetermined spectral range Λ, which either lies outside the visible range Γ of the light or includes only a relatively narrow-band range (Φ) of the visible range Γ, is locally altered by local doping with a foreign substance without the structures (7) formed by the pattern of the unaltered and the altered locations being perceptible by the naked human eye and so that the structures (7), in an operation of reading the information contained therein by means of a reading light beam (20) operating in the spectral range Λ, produce a measurable intensity modulation of the reading light beam (20) which is diffracted at the second surface elements (14) with the second diffraction structure (6).

5. An information carrier (1) which is in the form of a composite laminate (2) with a first and at least one further layer (3; 5), which layers have optical refractive indices n3 and n5 respectively, wherein the surface of the first layer (3), which is towards the further layer (5), has first diffraction structures (6) which are in the form of microscopically fine relief structures and which by diffraction of incident light produce a visually verifiable authenticity feature, characterized in that:
a) the first or the further layer (3; 5) is doped with a dye,
b) the further layer (5) is approximately transparent,
c) the absolute difference |n5-n3| over a large part of the visible range Γ of the electromagnetic spectrum is greater than 0.2 so that the first diffraction structures (6) produce visible diffraction effects,
d) the surface of the first layer (3) has second surface elements (14) with a second diffraction structure (6), which are separated by first surface elements (13) with the first diffraction structures (6), and
e) the first layer (3) or the further layer (5), by local heating above a limit temperature specific to the dye, can be irreversibly provided with structures (7), whereby the refractive index is locally altered at the heated locations in a predetermined spectral range Λ, which either lies outside the visible range Γ of the light or includes only a relatively narrow-band range (Φ) of the visible range Γ, without the structures (7) formed by the pattern of the unaltered and the altered locations being perceptible by the naked human eye and so that the structures (7), in an operation of reading the information contained therein by means of a reading light beam (20) operating in the spectral range Λ, produce a measurable intensity modulation of the reading light beam (20) which is diffracted at the second surface elements (14) with the second diffraction structure (6).

6. An information carrier (1) according to one of claims 1 or 3 through 5, characterized in that the dimensions of the second surface elements (14) are at most 0.3 mm.

7. An information carrier (1) according to one of claims 1 or 3 through 6 characterized in that the second diffraction structures (6) have an asymmetrical profile which can be checked as an authenticity feature.

8. An information carrier (1) according to claim 2 characterized in that the diffraction structures (6) have an asymmetrical profile which can be checked as an authenticity feature.

9. A document (9) with an information carrier (1) according to one of claims 1 through 8.

10. A document (9) according to claim 9 characterized in that the document (9) is a credit card, a value card, a banknote, an identity card or a pass.

11. A reading device (15) for an information carrier (1) according to claim 7, the reading device including a light source (16) and photodetectors (17), characterized in that the photodetectors (17) detect the light of the reading light beam (20) which is diffracted at the second diffraction structure (6) and in that the device (15) is designed for checking the authenticity of the information carrier (1) on the basis of the levels of intensity in order to test the presence of the asymmetrical profile of the second diffraction structure (6).

12. A reading device (15) for an information carrier (1) according to claim 8, the reading device including a light source (16) and photodetectors (17), characterized in that the photodetectors (17) detect the light of the reading light beam (20) which is diffracted at the diffraction structure (6) and in that the device (15) is designed for checking the authenticity of the information carrier (1) on the basis of the levels of intensity in order to test the presence of the asymmetrical profile of the diffraction structure (6).

13. A process for producing an information carrier (1) according to claim 4 characterized by the following steps:
a) producing a composite laminate (2) comprising at least a first and a further layer (3, 5; 5, 8), wherein optionally a strongly reflective layer (3) is embedded between the two layers (5, 8),
b) applying a foreign substance as a structured layer (22) to the further layer (5) of the composite laminate (2), and
c) heating the information carrier (1) for a predetermined period of time to a predetermined temperature which is below the softening point of the layers (3, 5) so that the foreign substance partially diffuses into the further layer (5).

14. A process according to claim 13 characterized in that the remains of the structured layer (22) are removed.

## Revendications

1. Support d'information (1) qui est conçu sous forme d'un composite de couche (2) comportant au moins une première, une seconde et une troisième couches (3; 4; 5) qui présentent un indice de réfraction optique n3, n4 et n5, la surface, orientée vers la seconde et la troisième couches (4; 5), de la première couche (3) présentant des premières structures de diffraction (6) qui sont conçues sous forme de structures en relief de finesse microscopique et qui, par suite de la diffraction d'une lumière incidente, créent un attribut d'authenticité vérifiable à l'oeil, support dans lequel la seconde couche (4) forme des structures (7) en ce sens que la seconde couche (4) ne recouvre que partiellement la première couche (3) et dans lequel la troisième couche (5) recouvre en contact direct, en fonction des structures (7), la seconde couche (4) ou la première couche (3), caractérisé par les caractéristiques qui font
a) que, sur de grandes parties de la plage visible Γ du spectre électromagnétique, les indices de réfraction n4 et n5 sont essentiellement réels et que donc la seconde et la troisième couches (4; 5) sont transparentes,
b) que les valeurs absolues des différences |n4-n3| et |n5-n3| sont, sur de grandes parties de la plage visible Γ, supérieures à 0,2, afin que les premières structures de diffraction (6) produisent des effets de diffraction visibles indépendamment des structures (7),
c) que les différences n4-n3 et n5-n3 sont approximativement égales sur de grandes parties de la plage visible Γ, afin que les structures (7) restent cachées à l'oeil humain,
d) que la surface de la première couche (3) présente deux éléments de surface (14), comportant une seconde structure de diffraction (6), qui sont séparés par des premiers éléments de surface (13) comportant les premières structures de diffraction (6), et
e) que la valeur absolue de la différence |n5-n4| vaut au moins 0,1 sur une seconde plage spectrale prédéterminée Λ qui soit se situe à l'extérieur de la plage visible Γ de la lumière, soit ne comporte qu'une plage (Φ) à bande relativement étroite de la plage visible Γ, afin que, lors de la lecture de l'information qu'elles contiennent au moyen d'un faisceau lumineux de lecture (20) situé sur la plage spectrale Λ, les structures (7) opèrent une modification mesurable du faisceau lumineux de lecture (20) réfracté sur les deux éléments de surface (14) comportant la seconde structure de diffraction (6).

2. Support d'information (1) qui est conçu sous forme d'un composite de couche (2) comportant au moins une première, une seconde et une troisième couches (3; 4; 5) qui présentent un indice de réfraction optique n3, n4 et n5, la surface, orientée vers la seconde et la troisième couches (4; 5), de la première couche (3) présentant des structures de diffraction (6) qui sont conçues sous forme de structures en relief de finesse microscopique support dans lequel la seconde couche (4) forme des structures (7) en ce sens que la seconde couche (4) ne recouvre que partiellement la première couche (3) et dans lequel la troisième couche (5) recouvre en contact direct, en fonction des structures (7), la seconde couche (4) ou la première couche (3), caractérisé par les caractéristiques qui font
a) que les indices de réfraction n3, n4 et n5 sont essentiellement réels sur de grandes parties de la plage visible Γ du spectre électromagnétique et que donc la première, la seconde et la troisième couches (3; 4; 5) sont transparentes,
b) que les indices de réfraction n3 et n4 sont approximativement égaux sur la plage visible Γ, de sorte qu'aucune diffraction ne se produit à leur surface limite commune,
c) que les valeurs absolues des différences des indices de diffraction |n5-n3|, |n5-n4| valent au maximum 0,2 sur la plage visible Γ afin que les structures de diffraction (6) restent le plus possible cachées à l'oeil humain, et
d) que la valeur absolue de la différence |n5-n3| vaut au moins 0,1 sur une seconde plage spectrale prédéterminée Λ qui soit se situe à l'extérieur de la plage visible Γ de la lumière, soit ne comporte qu'une plage (Φ) à bande relativement étroite de la plage visible Γ, afin que, lors de la lecture de l'information qu'elles contiennent au moyen d'un faisceau lumineux de lecture (20) situé sur la plage spectrale Λ, les structures (7), en fonction de l'existence de la seconde couche (4) n'opèrent pas de diffraction ou opèrent une diffraction sur les structures de diffraction (6).

3. Support d'information (1) selon la revendication 1 ou 2, caractérisé par le fait que la seconde couche (4) est dopée d'un corps étranger, en particulier d'un colorant, qui présente sur la plage spectrale Λ une constante d'absorption élevée.

4. Support d'information (1) qui est conçu sous forme d'un composite de couche (2) comportant une première et au moins une autre couche (3; 5) qui présentent un indice de réfraction optique n3 et n5, la surface, orientée vers l'autre couche (5), de la première couche (3) présentant des premières structures de diffraction (6) qui sont conçues sous forme de structures en relief de finesse microscopique et qui, par suite de la diffraction de la lumière incidente, créent un attribut d'authenticité vérifiable à l'oeil, caractérisé par les caractéristiques qui font
a) que l'autre couche (5) soit approximativement transparente,
b) que la valeur absolue de la différence /n5-n3/ soit supérieure à 0,2 sur de grandes parties de la plage visible Γ afin que les premières structures de diffraction (6) créent des effets de diffraction visibles,
c) que la surface de la première couche (3) présente deux éléments de surface (14) comportant une seconde structure de diffraction (6) qui sont séparées par des premiers éléments de surface (13) comportant les premières structures de diffraction (6), et
d) que l'autre couche (5) puisse être munie de structures (7) en ce sens que son indice de réfraction n5 est localement modifié par un dopage local avec un corps étranger, sur une plage spectrale prédéterminée Λ qui soit se situe à l'extérieur de la plage visible Γ de la lumière soit ne comporte qu'une plage (Φ) à bande relativement étroite de la plage visible Γ, sans que les structures (7), formées par le dessin des endroits non modifiés et des endroits modifiés, soient perceptibles à l'oeil nu de l'homme et qu'ainsi les structures (7), lors de la lecture de l'information qu'elles contiennent au moyen d'un faisceau lumineux de lecture (20) travaillant sur la plage spectrale Λ, opèrent une modulation d'intensité mesurable du faisceau lumineux de lecture (20) diffracté sur les seconds éléments de surface (14) comportant la seconde structure de diffraction (6).

5. Support d'information (1) qui est conçu sous forme d'un composite de couche (2) comportant une première et au moins une autre couche (3; 5) qui présentent un indice de réfraction optique n3 et n5, la surface, orientée vers l'autre couche (5), de la première couche (3) présentant des premières structures de diffraction (6) qui sont conçues sous forme de structures en relief de finesse microscopique et qui, par suite de la diffraction de la lumière incidente, créent un attribut d'authenticité vérifiable à l'oeil, caractérisé par les caractéristiques qui font
a) que la première ou l'autre couches (3; 5) soit dopée avec un colorant,
b) que l'autre couche (5) soit approximativement transparente,
c) que la valeur absolue de la différence |n5-n3| soit supérieure à 0,2 sur de grandes parties de la plage visible Γ afin que les premières structures de diffraction (6) créent des effets de diffraction visibles,
d) que la surface de la première couche (3) présente deux éléments de surface (14) comportant une seconde structure de diffraction (6) qui sont séparées par des premiers éléments de surface (13) comportant les premières structures de diffraction (6), et
e) que la première couche (3) ou l'autre couche (5) puisse, par échauffement local au-dessus d'une température limite propre au colorant, être irréversiblement munie de structures (7), étant précisé que, aux endroits chauffés, l'indice de réfraction n3 ou n5 est modifié localement sur une plage spectrale prédéterminée Λ qui soit se situe à l'extérieur de la plage visible Γ de la lumière soit ne comporte qu'une plage à bande relativement étroite (Φ) de la plage visible Γ, sans que les structures (7), formées par le dessin des endroits non modifiés et des endroits modifiés, soient perceptibles à l'oeil nu de l'homme et qu'ainsi les structures (7), lors de la lecture de l'information qu'elles contiennent au moyen d'un faisceau lumineux de lecture (20) travaillant sur la plage spectrale Λ, opèrent une modulation d'intensité mesurable du faisceau lumineux de lecture (20) diffracté sur les seconds éléments de surface (14) comportant la seconde structure de diffraction (6).

6. Support d'information selon l'une des revendications I ou 3 à 5, caractérisé par le fait que les dimensions des seconds éléments de surface (14) valent au maximum 0,3 mm.

7. Support d'information (1) selon l'une des revendications 1 ou 3 à 6, caractérisé par le fait que les secondes structures de diffraction (6) présentent un profil dissymétrique, vérifiable en tant qu'attribut d'authenticité.

8. Support d'information (1) selon l'une la revendication 2, caractérisé par le fait que les structures de diffraction (6) présentent un profil dissymétrique, vérifiable en tant qu'attribut d'authenticité.

9. Document (9) comportant un support d'information (1) selon l'une des revendications 1 à 8.

10. Document (9) selon la revendication 9. caractérisé par le fait que le document (9) est une carte de crédit, un titre, un billet de banque, une carte d'identité ou un passeport.

11. Lecteur (15) pour un support d'information (1) selon la revendication 7, qui comporte une source lumineuse (16) et des photodétecteurs (17), caractérisé par le fait que les photodétecteurs (17) saisissent les intensités de la lumière, diffractée sur les deux éléments de surface (14) comportant la seconde structure de diffraction (6), du faisceau lumineux de lecture (20) et que le lecteur analyse les rapports des intensités pour détecter le profil dissymétrique des secondes structures de diffraction (6).

12. Lecteur (15) pour un support d'information (1) selon la revendication 8, qui comporte une source de lumière (16) et des photodétecteurs (17), caractérisé par le fait que les photodétecteurs (17) saisissent les intensités de la lumière, diffractée sur la structure de diffraction (6), du faisceau lumineux de lecture (20) et que le lecteur analyse les rapports des intensités pour détecter le profil dissymétrique des structures de diffraction (6).

13. Procédé de fabrication d'un support d'information (1) selon la revendication 4, caractérisé par les pas suivants
a) fabriquer un composite de couche (2) constitué d'au moins une première et une seconde couches (3, 5), une couche (3a) fortement réfléchissante étant facultativement enchâssée entre les deux couches (3, 5),
b) appliquer un corps étranger comme couche structurée (22) sur l'autre couche (5) du composite de couche (2),
c) chauffer le support d'information (1) pendant une durée prédéterminée pour l'amener à une température prédétermine qui se situe encore en dessous du point de ramollissement des couches (3, 5), de façon que le corps étranger diffuse partiellement dans l'autre couche (5).

14. Procédé selon la revendication 13, caractérisé par le fait que l'on élimine les résidus de la couche structurée (22).
